# EUROPÄISCHE PATENTSCHRIFT

(11) **EP 1 197 402 B1**
(45) Veröffentlichungstag und Bekanntmachung des Hinweises auf die Patenterteilung: **19.07.2006**
(21) Anmeldenummer: 01123389.7
(22) Anmeldetag: 11.10.2001
(51) Int. Cl.: B60R 21/20, B60Q 5/00, B62D 1/04

(54) **Fahrzeuglenkrad**
Vehicle steering wheel
Volant de véhicule

(30) Priorität: 12.10.2000 DE 20017527 U
(43) Veröffentlichungstag der Anmeldung: 17.04.2002
(73) Patentinhaber: TRW Automotive Safety Systems GmbH, 63743 Aschaffenburg (DE)
(72) Erfinder: Schütz, Dominik, 63857 Waldaschaff (DE)
(74) Vertreter: Kitzhofer, Thomas

(56) Entgegenhaltungen:
- US-A- 5 350 190
- US-A- 5 380 037
- US-A- 5 775 725
- US-A- 5 810 535
- "STEERING WHEEL LOW COST GROUND FOR FLOATING HORN MECHANISM" RESEARCH DISCLOSURE, KENNETH MASON PUBLICATIONS, HAMPSHIRE, GB, Nr. 440, Dezember 2000 (2000-12), Seite 2039 XP001052274 ISSN: 0374-4353

## Beschreibung

Die Erfindung betrifft ein Fahrzeuglenkrad nach dem Oberbegriff des Anspruchs 1.

Bei derartigen Lenkrädern ist üblicherweise zwischen dem Gassackmodul und dem Lenkradskelett ein separater Hupkontaktschalter vorgesehen, der bei der Verschiebung des Gassackmoduls in Richtung der Längsachse betätigt wird. Dieser Hupkontaktschalter ist ein zusätzliches Bauteil, das extra montiert werden muß und damit bei der Herstellung des Fahrzeuglenkrades zusätzliche Kosten verursacht. Darüber hinaus nimmt der separate Hupkontaktschalter einen Teil des ohnehin knappen Bauraumes im Fahrzeuglenkrad in Anspruch. Ein weiterer Nachteil besteht darin, daß diese Schalter bei der Kontaktierung in der Regel Geräusche verursachen

Aus der gattungsgemäßen US-A-5 350 190 ist ein Fahrzeuglenkrad mit einem in Längsachse verschieblichen Gassackmodul bekannt. Das Gassackmodul besitzt eine Halteplatte, an dem mehrere teleskopartige Baugruppen mit Rastelementen vorgesehen sind. Ein äußeres Aufnahmeteil ist an der Halteplatte befestigt, und im Inneren des Aufnahmeteils ist ein Kunststoffrastelement vorgesehen, das mit seinen Rastarmen aus der Aufnahme herausragt. Rastelement und Aufnahme sind über eine Druckfeder entgegen der Hupenbetätigungsrichtung vorgespannt. Beim Drücken des Gassackmoduls federt die Baugruppe ein und die metallene Aufnahme kontaktiert unmittelbar das Lenkradskelett, so daß ein Stromkreis geschlossen wird.

Der Erfindung liegt daher die Aufgabe zugrunde, ein Fahrzeuglenkrad mit wenigen Bauteilen und verringertem Montageaufwand zu schaffen.

Diese Aufgabe wird durch ein Fahrzeuglenkrad nach Anspruch 1 gelöst.

Gemäß einer vorteilhaften Ausführungsform der Erfindung ist vorgesehen, daß bei unbetätigter Hupe das Verriegelungselement an einer Haltefläche am Rastelement an liegt, wobei an der Haltefläche oder am Verriegelungselement eine elektrische Isolierung vorgesehen ist, die einen elektrischen Kontakt zwischen Rast- und Verriegelungselement bei unbetätigter Hupe verhindert. Bei dieser besonders einfachen Ausgestaltung besteht die Rastverbindung aus lediglich zwei Teilen, die gleichzeitig die Kontaktelemente des Hupkontaktes bilden. Die isolierte Haltefläche am Rastelement bietet die Möglichkeit, das Rastelement und das Verriegelungselement als Kontakte zu verwenden und trotzdem bei unbetätigter Hupe über die beiden Elemente eine mechanische Verbindung zwischen Gassackmodul und Lenkradskelett herzustellen.

Weitere Ausgestaltungen der Erfindung und deren Vorteile ergeben sich aus den Unteransprüchen.

Die Erfindung wird nachfolgend anhand bevorzugter Ausführungsformen beschrieben, wobei auf die beigefügten Zeichnungen Bezug genommen wird. In diesen zeigt:
Figur 1 einen schematischen Querschnitt durch eine erste Ausführungsform eines erfindungsgemäßen Fahrzeuglenkrades;
Figur 2a einen vergrößerten Querschnitt der Einzelheit II des Fahrzeuglenkrades aus Figur 1 bei unbetätigter Hupe;
Figur 2b einen Querschnitt durch die Einzelheit II des Fahrzeuglenkrades aus Figur 1 bei betätigter Hupe;
Figur 3 eine perspektivische Ansicht der Einzelheit II des Fahrzeuglenkrades aus Figur 1.
Figur 4 eine Rastverbindung eines Fahrzeuglenkrades gemäß einer zweiten Ausführungsform der Erfindung aus einer ersten Perspektive;
Figur 5 die Rastverbindung aus Figur 4 aus einer zweiten Perspektive;
Figur 6 einen Querschnitt durch eine Rastverbindung eines Fahrzeuglenkrades gemäß einer dritten Ausführungsform der Erfindung bei unbetätigter Hupe; und
Figur 7 einen Querschnitt durch die Rastverbindung aus Figur 6 bei betätigter Hupe.

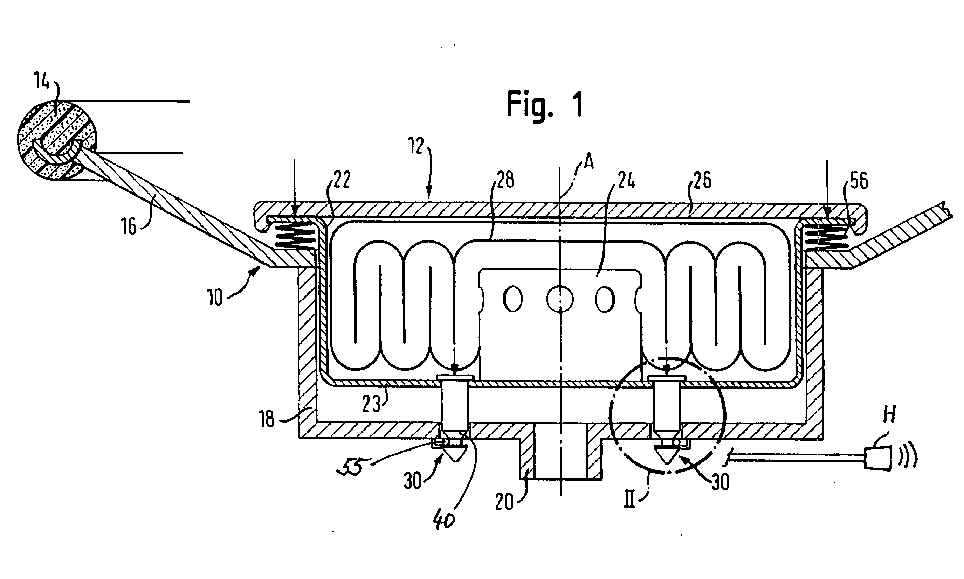

Das in Figur 1 schematisch dargestellte Fahrzeuglenkrad weist ein Lenkradskelett 10 und ein Gassackmodul 12 auf. Die Längsachse A des Lenkrades ist durch eine strichpunktierte Linie dargestellt. Das Lenkradskelett 10 hat einen umschäumten Lenkradkranz 14, der über Speichen 16 mit einer topfförmigen Lenkradnabe 18 verbunden ist. In der Längsachse A des Fahrzeuglenkrades ist an der Nabe 18 eine Muffe 20 zur Befestigung des Lenkrades an einer Lenksäule in üblicher Weise vorgesehen.

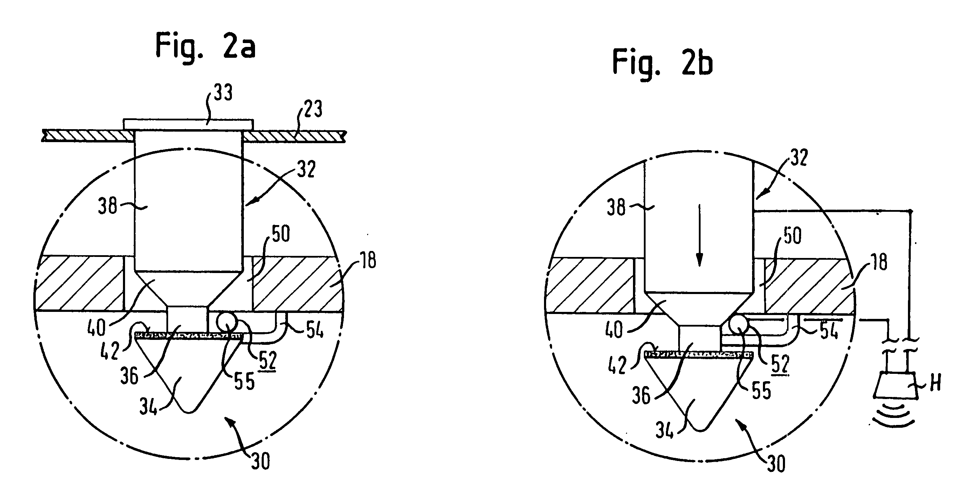

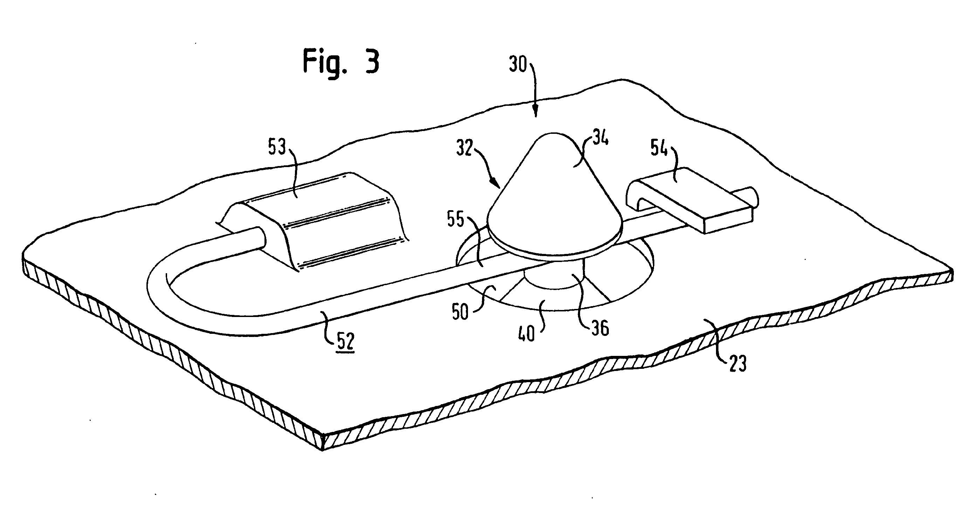

Das Gassackmodul 12 ist beispielhaft dargestellt und hat ein topfförmiges Modulgehäuse 22 mit einem Boden 23, welcher gleichzeitig den Träger für einen Gasgenerator 24 bildet. Das Modulgehäuse 22 ist zur Fahrzeuginsassenseite hin mit einer Abdeckung 26 verschlossen, die einen im Innern des Modulgehäuses 22 gefalteten Gassack 28 abdeckt. Das Gassackmodul 12 ist mittels Rastverbindungen 30 mit der Nabe 18 verbunden, von denen in Figur 1 lediglich zwei zu sehen sind, die aber in den Figuren 2a, 2b und 3 detaillierter dargestellt sind.

Jede der Rastverbindungen 30 umfaßt ein Rastelement in Form eines Bolzens 32 mit einem zylindrischen Schaft 38, der mit seinem Fußende 33 in den Boden 23 des Modulgehäuses 22 eingepreßt ist. An seinem Kopfende besitzt der Bolzen 32 einen kegelförmigen Endabschnitt 34, an den sich ein schmälerer Zwischenabschnitt 36 anschließt. Der Übergang vom Zwischenabschnitt 36 zum zylindrischen Schaft 38 des Bolzens wird von einem kegelstumpfförmigen Abschnitt gebildet, dessen Mantelfläche eine erste Kontaktfläche 40 bildet. An der Rückseite des Endabschnittes 34 ist senkrecht zur Längsachse des Bolzens 32, die parallel zur Längsachse A verläuft, eine ebene Haltefläche 42 ausgebildet. Diese Haltefläche 42 ist vom Bolzen 32 elektrisch isoliert, beispielsweise durch eine Beschichtung oder eine aufgesetzte Scheibe aus isolierendem Material.

Wie in der Figur 3 am besten zu sehen ist, ist in der Nabe 18 eine Öffnung 50 vorgesehen, durch welche sich der Bolzen 32 erstrecken kann. Auf der dem Gassackmodul 12 abgewandten Unterseite der Nabe befindet sich ein Verriegelungselement in Form eines Federdrahtes 52 als Teil des Rastelements. Der Federdraht 52 ist an der Nabe 18 befestigt, beispielsweise indem sein erstes Ende in eine Öffnung eines Vorsprunges 53 auf der Unterseite der Nabe eingepreßt ist. Das zweite Ende des Federdrahtes 52 ist parallel zur Ebene der Nabe zwischen der Nabenunterseite und einer daran ausgebildeten Lasche 54 elastisch verbiegbar, wobei die Lasche 54 eine Verbiegung des Federdrahtes 52 parallel zur Längsachse A weitgehend verhindert. Der Federdraht 52 erstreckt sich dezentral über die Öffnung 50. Seine Oberfläche bildet im Bereich der Öffnung 50 eine zweite Kontaktfläche 55.

Beide Kontaktflächen 40, 55 sind elektrisch in üblicher Weise mit den Signaleinrichtungen oder dem Steuergerät für die Auslösung der Hupe H verbunden, so daß sie zusammen einen Hupschalter bilden. Wenn der Bolzen 32 und der Boden 23 des Modulgehäuses 22 aus Metall bestehen, kann in vorteilhafter Weise die Kontaktfläche 40 auf dem Masse-Potential des Fahrzeuges liegen, da das Modulgehäuse 22 in der Regel sowieso mit der Fahrzeugmasse verbunden ist.

Bei der Montage des Gassackmodules 12 wird der Bolzen 32 durch die Öffnung 50 hindurchgesteckt, wobei der kegelförmige Endabschnitt 34 den Federdraht 52 elastisch zur Seite biegt, bis der Zwischenabschnitt 36 durch die Öffnung hindurchtritt und der Federdraht 52 wieder in seine Ausgangsstellung zurückschnappen kann. In diesem Zustand hintergreift der Federdraht 52 den Endabschnitt 34, so daß der Bolzen 32 nicht wieder aus der Öffnung 50 herausgezogen werden kann, da der Federdraht 52 an der Haltefläche 42 anliegt.

Zwischen dem Gassackmodul 12 und dem Lenkradskelett 10 sind Federelemente 56 vorgesehen, die in Figur 1 als Druckfedern dargestellt sind. Die Druckfedern 56 üben auf das Gassackmodul 12 eine Kraft aus, so daß der Federdraht 52 bei unbetätigter Hupe H spielfrei an der Haltefläche 42 anliegt. Damit wird eine Grundstellung festgelegt und vermieden, daß das Gassackmodul 12 klappert und während der Fahrt störende Geräusche verursacht.

Um die Hupe H zu betätigen, wird vom Fahrzeuginsassen entgegen der Kraft der Federn 56 über die Abdeckung 26 Druck auf das Gassackmodul 12 ausgeübt, so daß dieses in Richtung der Längsachse A verschoben wird (siehe Pfeile in Figur 1). Dabei wird auch der Bolzen 32 gegenüber der Nabe 18 verschoben, bis die erste Kontaktfläche 40 mit der zweiten Kontaktfläche 55 am Federdraht 52 in Kontakt kommt, wodurch der Hupkontakt geschlossen ist. Auf diese Weise wird der sowieso vorhandene Toleranzweg der Rastverbindung als Betätigungsweg für die Signalgebung verwendet und damit Bauraum gegenüber Lösungen gespart, bei denen das Gassackmodul separat verschiebbar gelagert ist. Dadurch, daß die erste Kontaktfläche 40 am Bolzen 32 in bezug auf die Verschieberichtung des Gassackmoduls 12 geneigt ist, gleitet der Federdraht 52 bei Berührung auf der Kontaktfläche 40. Auf diese Weise findet der elektrische Kontakt nicht nur an einem einzelnen Punkt statt, wodurch die Kontaktsicherheit erhöht ist. Außerdem ergibt sich durch die Relativbewegung der beiden Kontaktflächen 40, 55 ein Selbstreinigungseffekt und damit eine erhöhte Lebensdauer des Hupkontaktes. Vorteilhafterweise sind die beiden Kontaktflächen mit einer leitfähigen Beschichtung versehen, etwa galvanisch versilbert, um den Übergangswiderstand zu verringern und die Korrosionsgefahr herabzusetzen.

Selbstverständlich sind für die Ausführung der Kontaktflächen diverse Modifikationen denkbar. Der Bolzen 32 kann beispielsweise wie gezeigt metallisch sein und an der Haltefläche 42 eine Isolierung aufweisen. Alternativ wäre auch denkbar, den Bolzen 32 in Kunststoff auszuführen und die Kontaktfläche 40 mit einer Metallisierung zu versehen. Dies wäre insbesondere dann von Vorteil, wenn das Modulgehäuse 22 ebenfalls aus Kunststoff besteht, so daß der Bolzen 32 in einem Arbeitsgang mit angespritzt werden kann.

Weiterhin kann der Bolzen 32 alternativ auch an der Nabe 18 angebracht und die Öffnung 50 und der Federdraht 52 am Gassackmodul 12 vorgesehen sein, so daß die Rastverbindung umgekehrt angeordnet ist.

Eine besonders einfache Ausführungsform ergibt sich, wenn die Bolzen 32 und die Öffnungen 50 auf einer Kreislinie um die Längsachse A liegen, da in diesem Fall ein ringförmiger Federdraht, der mittels Laschen 54 geführt ist als einziges Verriegelungselement für alle Rastverbindungen verwendet werden kann.

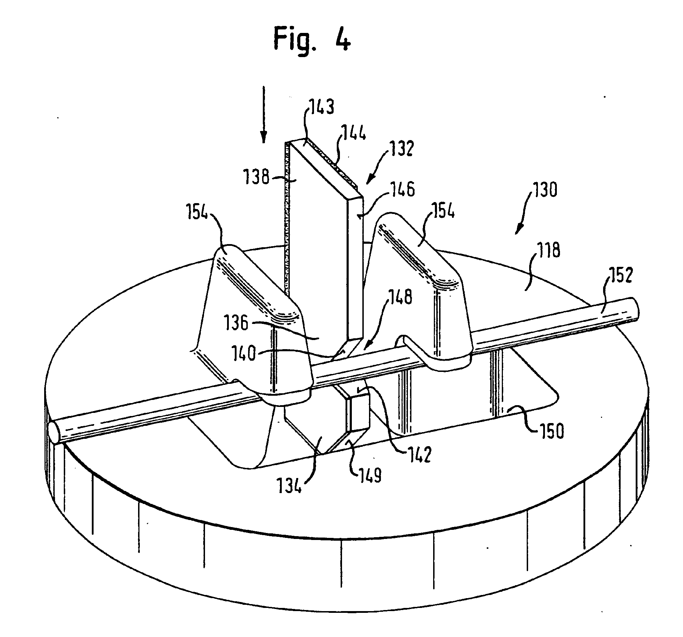

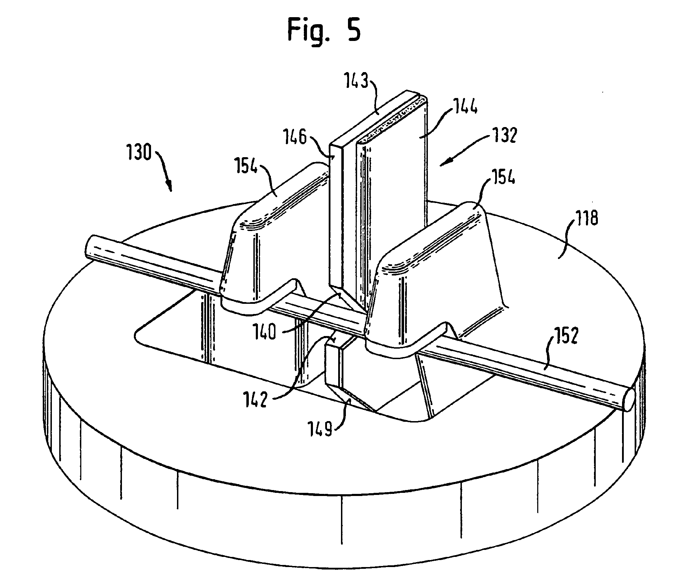

In den Figuren 4 und 5 ist eine weitere Ausführungsform einer Rastverbindung 130 für ein erfindungsgemäßes Fahrzeuglenkrad dargestellt, wobei für bereits bekannte Bauteile um 100 erhöhte Bezugszeichen Verwendung finden. In dieser Ausführungsform ist als Rastelement ein Rasthaken 132 vorgesehen, der aus einem Kontaktkörper 143 und einer Isolierung 144 besteht. Der Kontaktkörper 143 ist von einem flachen Metallstreifen gebildet, welcher beispielsweise durch Ausstanzen und anschließendes Umbiegen aus dem Boden des Modulgehäuses hergestellt werden kann und mit einem elektrisch isolierenden Material umspritzt ist, welches die Isolierung 144 bildet. In Figur 4 ist auf der linken Seite die Isolierung 144 aufgeschnitten, um den metallischen Kontaktkörper deutlich zu zeigen. Wie zu sehen ist, weist der Kontaktkörper einen Schaft 138 und einen Endabschnitt 134 auf, der über einen schmaleren Zwischenabschnitt 136 mit dem Schaft 138 verbunden ist.

Aufgrund des schmaleren Zwischenabschnitts 136 weist der Kontaktkörper an einer Schmalseite, die im folgenden als Kontaktseite 146 bezeichnet ist, eine Ausnehmung 148 auf, deren an den Endabschnitt 134 grenzende Seite rechtwinklig zur Längsachse des Rasthakens 132 verläuft, so daß an der Rückseite des Endabschnitts 134 eine Haltefläche 142 senkrecht zur Verschieberichtung (Pfeil in Fig. 4) gebildet ist. Die Kante 149 zwischen dem freien Ende des Endabschnittes 134 und der Kontaktseite 146 ist abgeschrägt. Die an den Schaft 138 grenzende Seite der Ausnehmung 148 ist in bezug auf die Verschieberichtung geneigt und stellt eine erste Kontaktfläche 140 dar. Die Isolierung 144 umgibt den Kontaktkörper fast vollständig, lediglich ein Bereich um die Kontaktseite 146 des Schaftes 138 und insbesondere die erste Kontaktfläche 140 sind freigehalten. Als Verriegelungselement ist wiederum ein Federdraht 152 vorgesehen, der, wie bereits beschrieben, an der Nabe 118 befestigt sein kann. Am Rand der Öffnung 150 sind zwei Laschen 154 ausgebildet, die den Federdraht 152 parallel zur Ebene der Nabe 118 führen. Der Rasthaken 132 greift in eine Öffnung 150 in der Nabe 118.

Beim Einstecken des Rasthakens 132 wird der Federdraht 152 von der abgeschrägten Kante 149 am Endabschnitt 134 des Rasthakens beiseite gebogen, bis der Rasthaken 132 soweit in die Öffnung 150 eingetaucht ist, daß der Federdraht 152 in die Ausnehmung 148 schnappen kann. Damit ist der Rasthaken 132 durch Anliegen des Federdrahtes 152 an der Haltefläche 142 gegen Herausziehen gesichert. Wie bereits in der ersten Ausführungsform beschrieben, wird die Haltefläche 142 durch Druckfedern zwischen Gassackmodul und Lenkradskelett in Anlage an den Federdraht 152 gehalten.

Durch die weitgehende Isolierung des Rasthakens 132 ist eine zusätzliche Führung des Rasthakens in der Öffnung 150 zur Vermeidung von Kurzschlüssen zwischen Rasthaken 132 und Nabe 118, nicht erforderlich.

Auch diese Ausführungsform bietet die Möglichkeit diverser Gestaltungsvarianten. So wäre es denkbar, den Rasthaken mit einem Kontaktkörper aus Metall, wie in den Figuren 4 und 5 dargestellt, jedoch ohne isolierende Umspritzung, auszuführen und stattdessen daneben parallel einen Isolierkörper von gleicher oder ähnlicher Gestalt aus einem elektrisch isolierenden Material anzuordnen, der in der Verschieberichtung teils versetzt ist, so daß bei einer Verschiebung des Rasthakens eine Berührung des Federdrahtes mit der ersten Kontaktfläche gestattet, mit der Haltefläche des Kontaktkörpers jedoch verhindert ist.

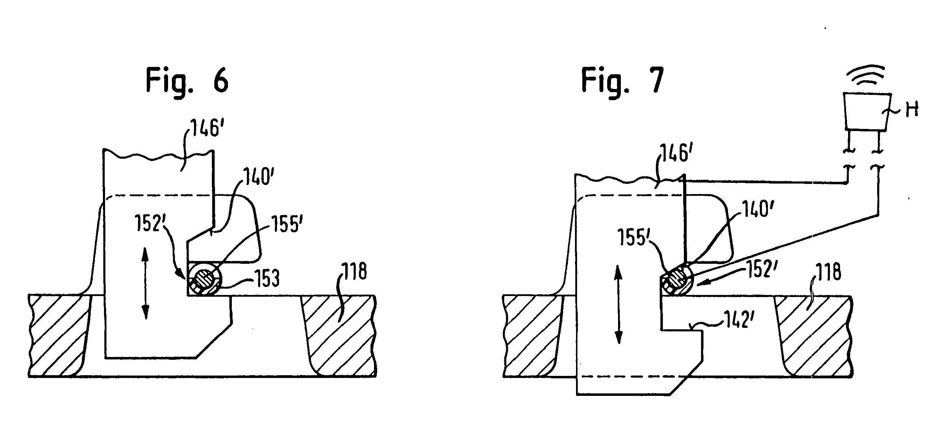

In vorteilhafter Weise kann alternativ statt des Rasthakens 146' der Federdraht 152' mit einer Isolierung 153 versehen sein, die im Bereich der Kontaktfläche 155', welche der ersten Kontaktfläche 140' gegenüberliegt, ausgespart ist, wie es in einer Variante in den Figuren 6 und 7 dargestellt ist. Diese Ausführung bietet fertigungstechnische Vorteile, da der Rasthaken meist elektrisch mit dem Generatorgehäuse verbunden ist und daher Massepotential führt, wohingegen der Federdraht sowieso gegen Masse isoliert werden muß. Außerdem ist die Isolierung des Federdrahtes leichter herzustellen. Mit 142' ist die Haltefläche bezeichnet, an der die Isolierung 154 in Fig. 6 anliegt.

Eine weitere Variante besteht darin, statt eines Federdrahtes für das Verriegelungselement einen im wesentlichen festen Draht zu verwenden und dafür den Rasthaken so elastisch auszubilden, daß er beim Einstecken in die Öffnung durch Gleiten der abgeschrägten Kante des Endabschnitts auf dem Verriegelungselement beiseite gedrückt werden kann, bis die Ausnehmung hinter dem Verriegelungselement einschnappt. Dies kann etwa dadurch geschehen, daß der Rasthaken in sich senkrecht zur Verschieberichtung elastisch ist. Eine andere Möglichkeit wäre, den Rasthaken senkrecht zur Verschieberichtung schwenkbar zu gestalten und mittels einer Feder elastisch zu beaufschlagen.

## Patentansprüche

1. Fahrzeuglenkrad mit einem Lenkradskelett (10), einer Längsachse (A) und mit einem Gassackmodul (12), das mittels wenigstens einer Rastverbindung (30; 130) mit dem Lenkradskelett verbunden und so gelagert ist, daß es zur Betätigung der Hupe in Richtung der Längsachse (A) verschiebbar ist, wobei
die Rastverbindung (30; 130) zwei elektrische Kontaktflächen (40, 55; 140, 155; 140'; 155') aufweist, die bei einer Verschiebung des Gassackmoduls (12) zur Betätigung der Hupe miteinander in Kontakt kommen,
die Rastverbindung (30; 130) ein Rastelement und ein Verriegelungselement aufweist, und eine zweite Kontaktfläche (55; 155') am Verriegelungselement ausgebildet ist,
**dadurch gekennzeichnet, daß** eine erste Kontaktfläche (40; 140; 140') am Rastelement ausgebildet ist.

2. Fahrzeuglenkrad nach Anspruch 1, **dadurch gekennzeichnet, daß** das Verriegelungselement bei betätigter Hupe mit der zweiten Kontaktflläche (55; 155; 155') an der ersten Kontaktfläche (40; 140; 140') anliegt und bei unbetätigter Hupe an einer Haltefläche (42; 142; 142') am Rastelement anliegt, und daß an der Haltefläche (42; 142) oder am Verriegelungselement (152') eine elektrische Isolierung (144) vorgesehen ist, die einen elektrischen Kontakt zwischen Verriegelungselement und Haltefläche (42; 142; 142') bzw. zwischen Rast- und Verriegelungselement bei unbetätigter Hupe verhindert.

3. Fahrzeuglenkrad nach Anspruch 2, **dadurch gekennzeichnet, daß** das Rastelement (32; 132) einen Endabschnitt (34; 134) und einen daran anschließenden schmaleren Zwischenabschnitt (36; 136) aufweist, wobei die Rückseite des Endabschnittes die Haltefläche (42; 142; 142') bildet und das Verriegelungselement den Endabschnitt an der Rückseite hintergreift.

4. Fahrzeuglenkrad nach Anspruch 3, **dadurch gekennzeichnet, daß** das Rastelement ein Rasthaken ist.

5. Fahrzeuglenkrad nach einem der Ansprüche 2 bis 4, **dadurch gekennzeichnet, daß** ein Federelement (56) vorgesehen ist, welches das Verriegelungselement (52; 152) bei nicht betätigter Hupe spielfrei an der Haltefläche (42; 142) in Anlage hält.

6. Fahrzeuglenkrad nach einem der Ansprüche 1 bis 5, **dadurch gekennzeichnet, daß** das Rastelement einen Kontaktkörper (38; 143) aus Metall und eine Isolierung aus einem elektrisch isolierenden Material aufweist, die wenigstens die Haltefläche (42; 142; 142') elektrisch isoliert.

7. Fahrzeuglenkrad nach Anspruch 6, **dadurch gekennzeichnet, daß** das Rastelement (143) aus Metall besteht und teilweise mit einer elektrisch isolierenden Schicht umspritzt ist.

8. Fahrzeuglenkrad nach einem der Ansprüche 1 bis 5, **dadurch gekennzeichnet, daß** das Verriegelungselement (152') aus Metall besteht und teilweise mit einer elektrisch isolierenden Schicht versehen ist.

9. Fahrzeuglenkrad nach einem der Ansprüche 1 bis 8, **dadurch gekennzeichnet, daß** eine der beiden Kontaktflächen (40; 55; 140) in bezug auf die Verschieberichtung des Gassackmoduls (12) geneigt ist und daß das Rast- oder das Verriegelungselement so elastisch ausgebildet ist, daß die Kontaktflächen bei Berührung aufeinander gleiten.

10. Fahrzeuglenkrad nach einem der Ansprüche 1 bis 9, **dadurch gekennzeichnet, daß** das Verriegelungselement ein Federdraht (52; 152) ist.

11. Fahrzeuglenkrad nach einem der vorhergehenden Ansprüche, **dadurch gekennzeichnet, daß** die Kontaktflächen (40, 55; 140) mit einer elektrisch leitfähigen Beschichtung versehen sind.

## Claims

1. A vehicle steering wheel comprising a steering wheel skeleton (10), a longitudinal axis (A) and a gas bag module (12) which is connected with the steering wheel skeleton by means of at least one detent connection (30; 130) and is mounted such that it is displaceable in the direction of the longitudinal axis (A) for actuation of the horn,
the detent connection (30; 130) having two electrical contact surfaces (40, 55; 140, 155; 140'; 155'), which upon displacement of the gas bag module (12) for actuation of the horn come into contact with each other,
the detent connection (30; 130) having a detent element and a locking element, and a second contact surface (55; 155') being formed on the locking element,
**characterized in that** a first contact surface (40; 140; 140') is formed on the detent element.

2. The vehicle steering wheel according to claim 1, **characterized in that**, with the horn actuated, the second contact surface (55; 155; 155') of the locking element lies against the first contact surface (40; 140; 140') and, with the horn not actuated, the locking element lies against a holding surface (42; 142; 142') on the detent element, and that the holding surface (42; 142) or the locking element (152') is provided with an electrical insulation (144) which, when the horn is not actuated, prevents an electrical contact between the locking element and the holding surface (42; 142; 142') or between the detent and locking elements.

3. The vehicle steering wheel according to claim 2, **characterized in that** the detent element (32; 132) has an end section (34; 134) and a narrower intermediate section (36; 136) adjoining thereto, the rear face of the end section forming the holding surface (42; 142; 142') and the locking element engaging behind the end section on the rear face.

4. The vehicle steering wheel according to claim 3, **characterized in that** the detent element is a detent hook.

5. The vehicle steering wheel according to any of claims 2 to 4, **characterized in that** a spring element (56) is provided, which holds the locking element (52; 152) in abutment against the holding surface (42; 142) free of play when the horn is not actuated.

6. The vehicle steering wheel according to any of claims 1 to 5, **characterized in that** the detent element has a contact body (38; 143) of metal and an insulation of an electrically insulating material, which electrically insulates at least the holding surface (42; 142; 142').

7. The vehicle steering wheel according to claim 6, **characterized in that** the detent element (143) consists of metal and is partially encased in an injection-molded electrically insulating layer.

8. The vehicle steering wheel according to any of claims 1 to 5, **characterized in that** the locking element (152') consists of metal and is partially provided with an electrically insulating layer.

9. The vehicle steering wheel according to any of claims 1 to 8, **characterized in that** one of the two contact surfaces (40; 55; 140) is inclined in relation to the displacement direction of the gas bag module (12) and that the detent element or the locking element is made to be so elastic that the contact surfaces slide on each other on contact.

10. The vehicle steering wheel according to any of claims 1 to 9, **characterized in that** the locking element is a spring wire (52; 152).

11. The vehicle steering wheel according to any of the preceding claims, **characterized in that** the contact surfaces (40, 55; 140) are provided with an electrically conductive coating.

## Revendications

1. Volant de direction de véhicule, comportant un squelette de volant (10), un axe longitudinal (A) et un module de coussin à gaz (12) qui est relié au squelette de volant par au moins une liaison d'enclenchement (30 ; 130) et qui est monté de telle sorte qu'il est déplaçable en direction de l'axe longitudinal (A) pour actionner le klaxon, dans lequel
la liaison par enclenchement (30 ; 130) présente deux surfaces de contact électriques (40, 55 ; 140, 155 ; 140', 155') qui, en cas de déplacement du module de coussin à gaz (12), viennent en contact mutuel pour actionner le klaxon,
la liaison par enclenchement (30 ; 130) présente un élément d'enclenchement et un élément de verrouillage, et une deuxième surface de contact (55 ; 155') est réalisée sur l'élément de verrouillage,
**caractérisé en ce qu'**une première surface de contact (40 ; 140 ; 140') est réalisée sur l'élément d'enclenchement.

2. Volant de direction selon la revendication 1, **caractérisé en ce que** lorsque le klaxon est actionné, l'élément de verrouillage est en appui par la deuxième surface de contact (55 ; 155 ; 155') sur la première surface de contact (40 ; 140 ; 140') et, lorsque le klaxon n'est pas actionné, l'élément de verrouillage est en appui sur une surface de retenue (42 ; 142 ; 142') sur l'élément d'enclenchement, et **en ce que** sur la surface de retenue (42 ; 142) ou sur l'élément de verrouillage (152') est prévue une isolation (144) qui empêche un contact électrique entre l'élément de verrouillage et la surface de retenue (42 ; 142 ; 142') et entre l'élément d'enclenchement et l'élément de verrouillage, respectivement, lorsque le klaxon n'est pas actionné.

3. Volant de direction selon la revendication 2, **caractérisé en ce que** l'élément d'enclenchement (32 ; 132) présente un tronçon d'extrémité (34 ;134) et un tronçon intermédiaire (36 ; 136) plus étroit s'y raccordant, la face postérieure du tronçon d'extrémité formant la surface de retenue (42 ; 142 ; 142') et l'élément de verrouillage s'engageant sur la face postérieure du tronçon d'extrémité.

4. Volant de direction selon la revendication 3, **caractérisé en ce que** l'élément d'enclenchement est un crochet d'enclenchement.

5. Volant de direction selon l'une des revendications 2 à 4, **caractérisé en ce qu'**il est prévu un élément à effet de ressort (56) qui maintient l'élément de verrouillage (52 ; 152) sans jeu en appui sur la surface de retenue (42 ; 142) lorsque le klaxon n'est pas actionné.

6. Volant de direction selon l'une des revendications 1 à 5, **caractérisé en ce que** l'élément d'enclenchement présente un corps de contact (38 ; 143) en métal et une isolation en un matériau à isolation électrique qui isole électrique au moins la surface de retenue (42 ; 142 ; 142').

7. Volant de direction selon la revendication 6, **caractérisé en ce que** l'élément d'enclenchement (143) est constitué par du métal et est en partie enrobé par extrusion d'une couche électriquement isolante.

8. Volant de direction selon l'une des revendications 1 à 5, **caractérisé en ce que** l'élément de verrouillage (152') est constitué par du métal et est en partie pourvu d'une couche électriquement isolante.

9. Volant de direction selon l'une des revendications 1 à 8, **caractérisé en ce qu'**une des deux surfaces de contact (40 ; 55 ; 140) est inclinée par rapport à la direction de déplacement du module de coussin à gaz (12) et **en ce que** l'élément d'enclenchement ou l'élément de verrouillage est réalisé de manière si élastique que les surfaces de contact glissent l'une sur l'autre lorsqu'elles se touchent.

10. Volant de direction selon l'une des revendications 1 à 9, **caractérisé en ce que** l'élément de verrouillage est un fil d'acier pour ressort (52 ; 152).

11. Volant de direction selon l'une des revendications précédentes, **caractérisé en ce que** les surfaces de contact (40, 55 ; 140) sont pourvues d'un revêtement électroconducteur.
